# EUROPEAN PATENT APPLICATION

(11) **EP 1 468 808 A1**
(43) Date of publication of application: **20.10.2004**
(21) Application number: 02783608.9
(22) Date of filing: 25.11.2002
(51) Int. Cl.: B29C 47/08

(54) **METHOD FOR PRODUCING DOUBLE-WALL CORRUGATED TUBE**

(30) Priority: 23.01.2002 JP 2002013732
(71) Applicant: DENKI KAGAKU KOGYO KABUSHIKI KAISHA, Chiyoda-ku, Tokyo 100-8455 (JP)
(72) Inventor: HARAGUCHI, Hideto, Denki Kagaku Kogyo K.K., Kanagawa 247-8510 (JP); HASEGAWA, Noboru, Denki Kagaku Kogyo K. K., Kanagawa 247-8510 (JP); TSUGAWA, Daisuke, Denki Kagaku Kogyo K. K., Kanagawa 247-8510 (JP); URABE, Hiroshi, Denki Kagaku Kogyo K. K., Kanagawa 247-8510 (JP)
(74) Representative: Leson, Thomas Johannes Alois, Dipl.-Ing.
(86) International application number: PCT/JP2002/012259
(87) International publication number: WO 2003/061943

(57) **Abstract**

For simply and surely manufacturing a double wall corrugated pipe having a socked part of a predetermined shape without any deformation, in a method for manufacturing a double wall corrugated pipe 1 having a slot part 3 on one end and a socket part 2a on the other hand, an external wall 11 (21, 31) of a continuous irregular circular shape, and an inner wall 12 (22) of a cylindrical shape by subjecting a thermoplastic resin to extrusion molding, before the double wall corrugated pipe 1 to be extrusion-molded is cooled off, a pore is formed in an external wall 21 portion of the socket part 2a by piercing with a needle 5 to allow a hollow chamber23 of the socket part 2a to communicate with the air, so as to be designed to surely prevent shrinkage or deformation of an external wall 21 of the socket part 2b accompanied by a decrease in temperature.

## Description

### Technical Field

The present invention relates to a method for manufacturing a double wall corrugated pipe. In particular, the present invention relates to a method for manufacturing a double wall corrugated pipe to be used for a general-purpose drainage pine, an information box protecting tube, and so on, which is formed by extrusion such that a cylindrical inner wall is heat-fused on the inner side of a reinforcing external wall having projections and depressions.

### Background Art

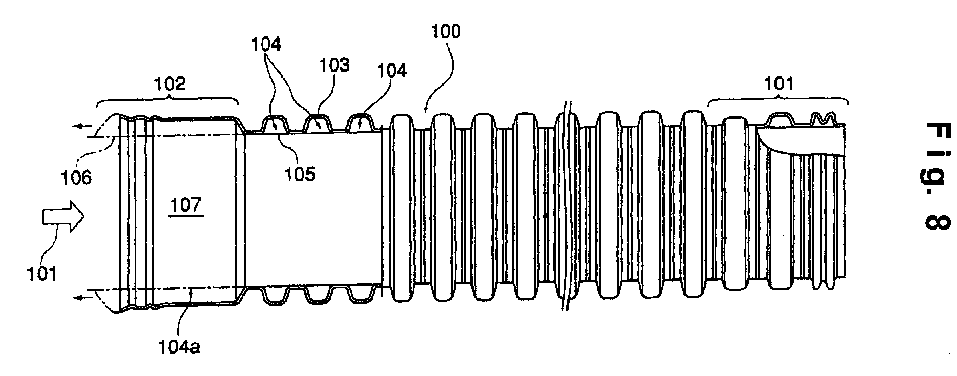

At first, according to the attached Fig. 8, a general conformation of a double wall corrugated pipe will be described. The double wall corrugated pipe denoted by the reference numeral 100 is a tubular body of a single connection unit having a slot part 101 on the one end thereof and a socket part on the other end thereof, which is cut after continuous extrusion molding of a thermoplastic resin.

This double wall corrugated pipe 100 comprises: an external wall 103 having projections and depressions from an outward appearance; and a cylindrical inner wall 105 which is heat fused in the inside of the external wall 103 while forming hollow chambers 104.

The socket part 102 has a leaving portion 106 represented by a phantom line in Fig. 8 to be removed by cutting with a predetermined procedure after molding, so that it will be designed to have an inner wall surface shape where the slot part 101 can be attached by insertion.

Here, in the molding step of the method for manufacturing the double wall corrugated pipe 100 as described above, the air pressure in the hollow chamber 104 occluded by inner and external walls decreases as the molded corrugated pipe cools. Before complete solidification, the external wall is deformed and tends to be destroyed.

In particular, such a tendency is conspicuous in the socket part 102 having a large volume hollow chamber. Unless the deformation of the socket part 102 is solved, the manner in which the slot part 101 is attached in the socket part 102 by insertion is interfered.

Therefore, conventionally, in the molding step, to cope with the above problem, compressed gas is injected into the hollow chamber 104a of the socket part 102 and a compressor (not shown in the figure) having a perforating function is inserted into an inner cavity 107 of the corrugated pipe 100 to form pores in the inner wall.

For instance, in JP-B 03-65262, there is disclosed a method for forming a single-wall bell-shaped part on the double wall pipe.

In the gazette, prior to substantial cooling-down of a pipe (corrugated pipe), there is disclosed a method for manufacturing a double wall pipe (double wall corrugated pipe) which is devised such that the hollow chambers located between the interior and exterior wall parts are ventilated while keeping the shape of the inner wall by forming pores in the inner wall at the respective bell-shaped parts.

However, in this conventional method desired, an apparatus for injecting compressed gas and a pressure-adjusting step have been required. In addition, there were needs of inserting a compressor for perforating the inner wall into the inner cavity of the corrugated pipe and providing apparatuses such as a cutter and an actuator for actuating the cutter to make pores into the inner wall.

In other words, there are a large number of devices required for preventing the deformation of the external wall. In addition, costs for these devices are high, and also the forming steps thereof have been complicated because of the structural features including the formation of pores in an inner wall.

Therefore, the present invention aims at offering a method for simply and certainly manufacturing a double wall corrugated pipe having a socket part of a predetermined form without requiring a complicated and large-scale device, without need of making complicated arrangements at the time of manufacture, and without need of a complicated gas pressure adjustment.

### Disclosure of the Invention

According to the present invention, for solving the above technical problems, the following means will be adapted. At first, there is provided a method for manufacturing a double wall corrugated pipe having a slot part on one end, a socket part on the other end, an external wall of a continuous irregular shape, and an inner wall of a tubular shape (not limited to a cylindrical shape) by subjecting a thermoplastic resin to extrusion molding, wherein, before the double wall corrugated pipe to be extrusion-molded is cooled off, a pore in an external wall portion of the socket part by piercing with a needle to allow a hollow chamber of the socket part to communicate with the air, so as to be designed to prevent shrinkage or deformation of an external wall of the socket part accompanied by a decrease in temperature.

By the way, this manufacturing method can be extensively applied to double wall corrugated pipes provided with their respective tubular structures of any external shapes such as cylindrical, square, and polygonal shapes.

Here, a suitable part of the external wall where the needle is stuck into is a part without affecting the quality of the final product even though any pore is formed therein. That is, the external wall part of the discarding sack portion in the socket part being extrusion-molded. Furthermore, in the present invention, the "discarding sack portion" means that a series of corrugated pipes continuously extrusion-molded are decoupled at predetermined positions and provided as additional parts to be removed at the time of obtaining a corrugated pipe as a single connection unit as a final product and also provided as a portion on which a hollow chamber is formed, which obstructs the socket part at the stage of being extrusion-molded.

Substantially veering the technical idea of predetermined penetrating device to be inserted into the inner cavity part of the above socket part, a pore is formed such that the external part, more specifically an external wall part of the above discarding sack portion to be continuously mounted on the socket part is selected and a pore is formed therein. Furthermore, a simple method is adopted such that the formation of a pore in an external wall is carried out by stabbing a simple member of a needle into the external wall.

When the pore is formed in the external wall part of the socket part, a hollow chamber obstructed by the internal and external walls of the socket part is allowed to communicate with the air and thus the inner pressure of the hollow chamber becomes atmospheric pressure. As a result, it becomes possible to effectively prevent the deformation (crushing) of the socket part concurrently occurred with a decrease in volume of the hollow chamber caused by a decrease in temperature in the molding process.

More specifically, it is possible to adopt means by which the needle is attached on a metallic mold for molding the external wall of the socket part and the needle is then stabbed into the external wall of the socket part at predetermined timing with the motion of a molding machine.

In other words, in the molding machine used in the manufacturing method of the present invention, two or more kinds of metallic molds required for molding a corrugated pipe into a predetermined external shape are arranged in predetermined order such that the corresponding upper and lower molds form a pair. In the molding process, the metallic mold complex repeats the movement of turning around like a caterpillar. In the present invention, a metallic mold to be involved in molding the external wall of the socket part is selected from the metallic mold complex and is then provided with a needle at a predetermined position so that it will project toward the resin. At the time of molding the external wall of the socket part, this needle is stabbed into the external wall of the socket part currently in the process of molding and the tip of the needle is stabbed and inserted into the hollow chamber of the socket part.

Here, in the manufacturing method of the present invention, the needle which may be suitably adopted in particular is one in the form of a tube with a hollow therein to communicate with the air and a tip portion thereof has an inclined surface facing laterally and presenting generally the Japanese katakana letter of " 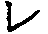 ".

The inclined surface facing laterally and presenting generally the letter " 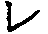 " means that the cylindrical tip is cut off crosswise only once from a predetermined upper position to the downward. Besides, but needless to say, the tip portion of the needle being stabbed and inserted into the hollow member of the socket part opens into an internal cavity.

According to the configuration of the needle described above, the hollow member of the socket part becomes possible to communicate with the air through the internal cavity portion of the needle as the same time as the needle is stabbed and inserted into the external wall of the socket part. In addition, as the tip portion in the form of the letter " 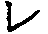 " facing laterally is sharp, it does not give a warp on the external wall of the socket as it is not forcefully inserted. Therefore, the needle can quickly penetrate the external wall and is easily stabbed and inserted into the hollow chamber of the socket part.

Furthermore, the present invention adopts the configuration the tip portion of the needle such that the needle is stabbed while the inclined surface of the tip portion is arranged in the direction opposite to the direction of extrusion molding. Therefore, comparing with the arrangement of the inclined surface in the direction parallel to that of the extrusion molding, it is apparent that an effect of forming a pore more easily will be exerted.

Particularly, at the stage of extrusion molding, the above action can be dominantly exerted when the needle is stabbed into the inclined wall surface of a discarding sack portion which is being successively formed on the socket part.

As described above, the present invention has a technical signification in that a double wall corrugated pipe having a socket part of a predetermined shape in which a slot part can be surely inserted and fixed can be reliably manufactured with a simplified device configuration.

### Brief Description of the Drawings

Fig. 1 is a partial external view of the periphery of a socket part (2a) or a slot part (3) of a double wall corrugated pipe (1) in a state of being arranged in series, which are currently extrusion molded by the manufacturing method of the present invention.
Fig. 2 is a view showing the condition of one step in the process of molding a corrugated pipe (1) using a molding machine (6), an extruder (M), or the like.
Fig. 3 (A) is a partial cross sectional view of the tip portion (5b) of a needle (5) suitable for the manufacturing method of the present invention and Fig. 3(B) is a partial front view where an inclined surface (5c) of the tip portion (5b) of the needle (5) is viewed from the direction of the arrow P in Fig. 2(A).
Fig. 4(A) is a view showing a needle (5) having a pointed tip portion, and Fig. 4(B) is a view showing a needle (52) having a reversed V-shaped tip portion.
Fig. 5 (Table) is a table representing the results of the first examination.
Fig. 6 (Table) is a table representing the results of the second examination.
Fig. 7 (A) is a view showing the state of forming a pore in Test No. 1 of the second examination, and Fig. 7(B) is a view showing the state of forming a pore in Test No. 2 of the second examination.
Fig. 8 is an external view of the conventional typical double wall corrugate pipe (100).

### Best Mode for Carrying Out the Invention

Hereinafter, preferred embodiments of the present invention will be described with reference to the attached drawings.

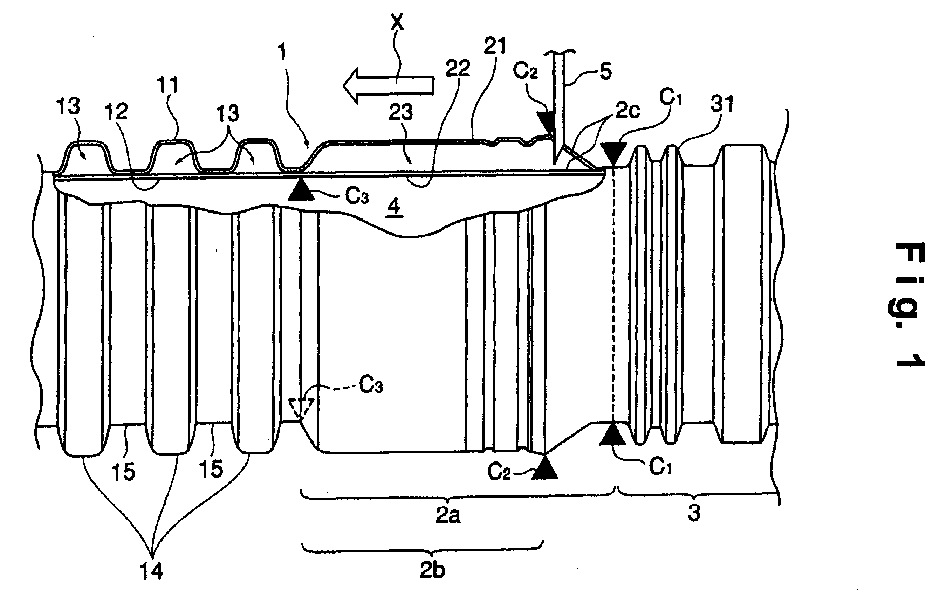

First, Fig. 1 is a partial external view of the periphery of a socket part of a double wall corrugated pipe (hereinafter, simply referred to as "corrugated pipe"), which is currently extrusion molded in a state of being connected in series.

The corrugated pipe 1 comprises an external wall 11 having an irregular shape formed in a main purpose of an improvement in strength and an inner wall 12 having a cylindrical form heat-fused on an inner wall surface portion of the external wall 11.

The external wall 11 has an irregular shape such that projected portions 14 and depressed portions 15 are repeatedly formed. In the inside of each projected portion 14, a circular hollow chamber 13 obstructed by the external wall 11 and inner wall 12 is formed.

By the way, the reference numeral 4 in Fig. 1 denotes an internal cavity portion in the inside of the inner wall 12. The internal cavity portion 4 will allow the flow of water therethrough when it is used as a drainage pipe, while it will allow the storage of an information box or the like therein when it is used as a protecting tube.

The corrugate pipe 1 further comprises, at certain intervals, a socket part 2a having a projected portion longer than the previously-mentioned projected portion 14; and a slot part 3 formed adjacently to the socket part 2a in the molding stage.

The socket part 2a and the slot part 3 are separated from each other by cutting in the peripheral direction at the respective positions denoted by the reference marks C₁, C₂, and C₃ in Fig. 1. Therefore, the final product to be obtained is a single connection unit of a corrugated pipe (see, the reference numeral 100 in Fig. 8).

In this cutting step, a discarding sack portion denoted by the reference numeral 2c is removed and thus the socket part 2b which can be attached by insertion with a slot part 3 is obtained.

In the inside of the socket part 2a at the molding stage, a generally tubular hollow chamber 23 obstructed by the external wall 21 of the socket part (hereinafter, simply referred to as "external wall 21") and the inner wall 22 of the socket part (hereinafter, simply referred to as "internal wall 22").

In the molding process, the hollow chamber 23 tends to reduce its volume in proportion to a gradual reduction of temperature and tends to generate negative pressure which pulls the external wall 21 inside. If the external wall 21 is deformed by warping with the action of negative pressure, it becomes problem because any trouble will be caused on the insertion attachment of the slot part 3.

Therefore, the present invention is designed to stab a needle 5 having an internal cavity portion communicating with the air into the hollow chamber 23 in the molding process.

This permits the hollow chamber 23 obstructed by the external wall 21 and internal wall 22 of the socket part 2a to communicate with the air, making the inner pressure of the hollow chamber 3 equal to atmospheric pressure. Consequently, it becomes possible to effectively prevent the deformation (crushing) of the external wall 21 concurrently occurred by a volume reduction of the hollow chamber 23 with a decrease in temperature in the molding process.

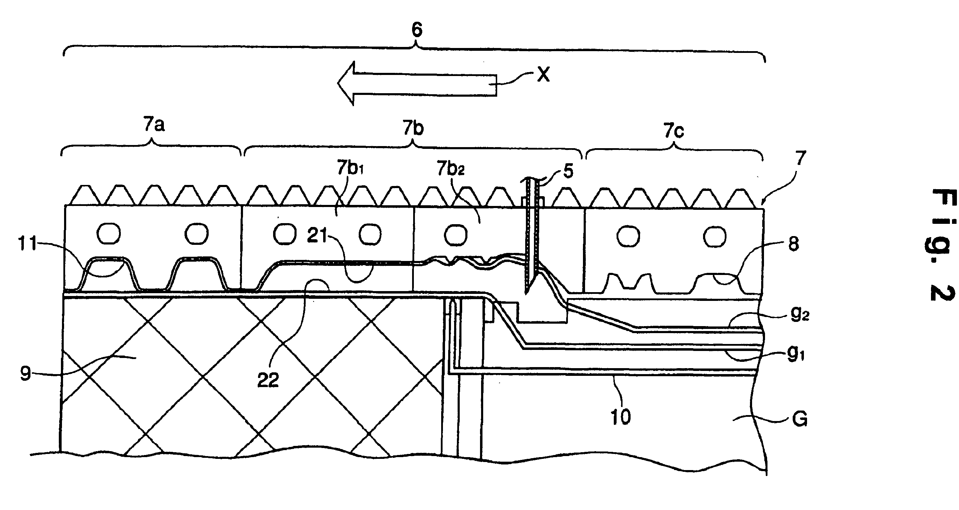

Referring now to Fig. 2, a method for manufacturing a corrugated pipe 1 will be described in detail. Fig. 2 is a view that represents the condition of a step at which the corrugated pipe 1 is molded.

The corrugated pipe 1 is provided as a tubular body having a double wall structure, which is molded from a tube formed from a thermoplastic resin in a molten state being extruded from circular dices g₁ and g₂ forming a double-walled structure equipped in the inside of an extruder denoted by the reference mark G in Fig. 2.

More specifically, the corrugated pipe 1 is shaped by pressing a metallic mold complex 7 having an inner wall surface of a predetermined shape equipped in a molding machine 6 against a resin on the external wall side by inner pressure at a temperature not less than the softening point or not more than the melting point of the thermoplastic resin being currently extruded. By the way, the reference numeral 9 in Fig. 2 denotes a mandrel in which cooled water flows and the reference numeral 10 denotes an air-blowing part.

As a method for bringing a molten resin into close contact with the molding machine 6, any of a blow molding method for swelling with pressure air and a vacuum molding method for subjecting a metallic mold inner wall region to vacuum suction can be adopted.

The thermoplastic resins to be used in the manufacturing method of the present invention include a polyethylene resin, polypropylene resin, and vinyl chloride resin, and in particular the polyethylene resin is preferable because of its molding ability, fusing ability, and mechanical strength.

Here, the above molding machine 6 has the molding-machine function, the cooler function, and the puller function in combination. In addition, the molding machine 6 comprises a pair of upper and lower metallic mold complexes 7, which form the external wall of the tube by means of inner peripheral grooves 8 of a predetermined shape in the predetermined order.

The metallic mold complex 7 comprises plural kinds of metallic molds which are connected to each other so as to be designed to be continuously driven like a cater repeats the movement of turning around like a caterpillar in the direction of extruding a molten resin.

The metallic mold complex 7 comprises a metallic mold 7a for the main body, which is involved in molding the external wall 11 of a middle portion of the main body in the corrugated pipe 7, a metallic mold 7b (7b₁, 7b₂) for molding a socket part, which is involved in molding the external wall 21 of a socket part 2a, and a metallic mold 7c for molding a slot part, which is involved in molding the external wall 31 of a slot part 3 (see Fig. 1). These metallic molds 7a-7c are connected and arranged so as to correspond to the external wall shape.

Here, in the manufacturing method of the present invention, among two metallic molds 7b₁ and 7b₂ constituting the socket part metallic mold 7b, the metallic mold 7b₂ arranged on the backward in the extrusion direction X is designed so as to be equipped with a needle 5 for forming a pore into a predetermined area of the external wall 21.

The step of forming a pore (the step of stabbing) with the needle 5 utilizes the process of successively molding external walls 11, 21, 31 in order in synchronization with the movement of the molding machine 6. The needle 5 attached on the metallic mold 7b₂ forms a pore in a predetermined area of the external wall 21 of the socket part 2a in synchronization with the movement of the molding machine 6.

By the way, in the case of a vertical-type molding machine, it takes advantage of its characteristic feature of continuously rotating up and down such that the needles 5 are attached on the upper and lower sides. In the case of a horizontal type molding machine, the needles 5 are attached in a horizontal direction in the same idea.

Here, the pore-forming needle 5 is preferably of having a sharp tip portion 5_{b} like a knife, a hollow like an injection needle, and a tubular shape. The materials thereof include stainless steel, copper, aluminum, glass, and polycarbonate resin. Particularly, stainless steel is preferable. The number of needles to be attached may be one or two.

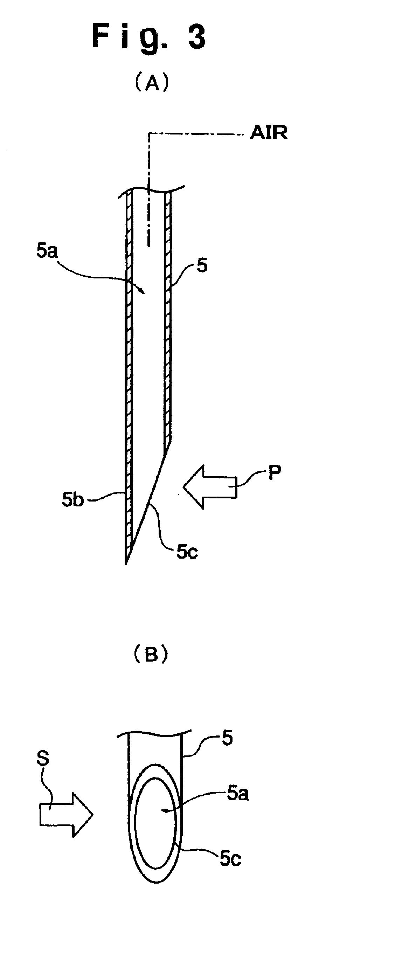

Here, Fig. 3(A) is a partial cross sectional view of the periphery of the tip portion 5b of a needle 5 particularly suitable for the manufacturing production of the present invention. Fig. 3 (B) is a partial front view that illustrates the inclined surface 5c of the tip portion 5b of the needle 5 from the direction of the arrow P in Fig. 3(A). The configuration of the need 5 will be described briefly with reference to these figures.

The needle 5 has a cylindrical shape with an internal cavity portion 5a. The tip portion 5b is cut off in an oblique direction and is edged sharply and the inclined surface 5c of the tip portion 5b has an opening of the internal cavity portion 5a (see Fig. 3(B)). The internal cavity portion 5a is designed to communicate with the air.

Here, the needle 5 is attached such that the tip portion 5b thereof is protruded from the inner wall surface of the metallic mold 7b₂ which is involved in the molding of the external wall 21 of the socket part 2a. The needle 5 is stabbed into the outside of the external wall 21 by the metallic mold 7b₂ in timing with the molding of the external wall 21 of the socket part 2a, so that the tip portion 5b having the opened inclined surface 5c can be stabbed and inserted into the hollow chamber 23. Consequently, the needle 5 fulfills a role of allowing the hollow chamber 23 to communicate with the air.

### First examination

Here, the inventors of the present application conducted the first examination for the selection and verification of a suitable needle for the invention.

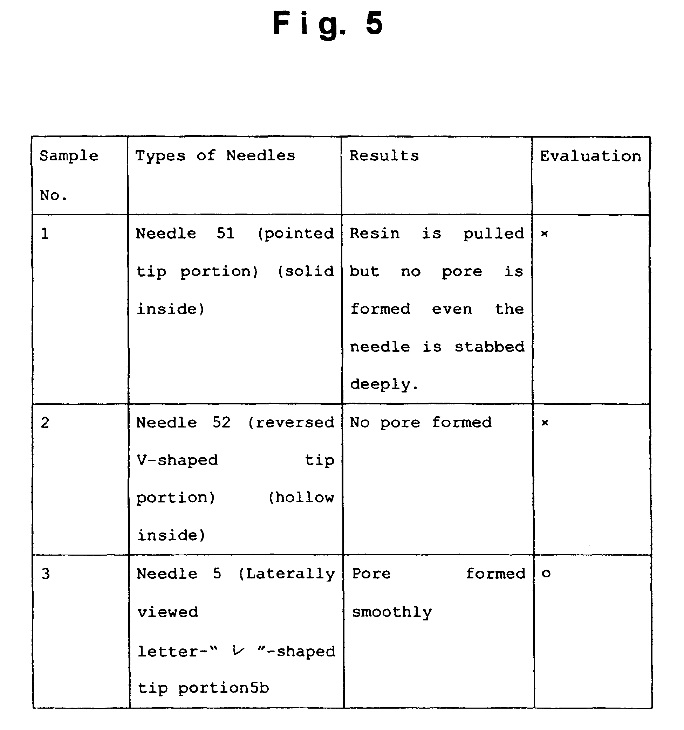

The results are shown in Fig. 5(Table). By the way, the present first examination was carried out under the following conditions: corrugated tube material: polyethylene resin; product dimensions: 250 mm in inner diameter and 10 mm in thickness, material of needle: stainless steel, and outer diameter of needle: 8 mm. The evaluation was conducted by visually observing the external appearance and evaluated on a two scale.

Here, in Fig. 5(Table), "x" represents failure as a pore is not opened and "o" represents good as a pore is smoothly formed, respectively.

As is evident from Fig. 5 (Table) , it is found that the needle suitable for the manufacturing method of the present invention is a needle having the conformation represented by the reference numeral 5 in Fig. 3. That is, the needle has the tip portion 5b having an external appearance of Japanese katakana letter of " 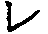 " viewing from the lateral direction (concretely, viewing from the direction of the arrow S in Fig. 3(A) and Fig. 3(B)).

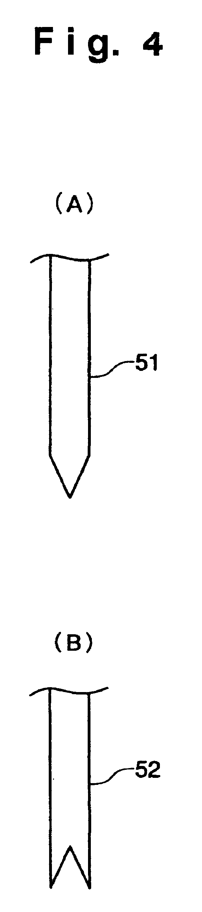

On the other hand, any pore is formed in a needle 51 having a pointed tip portion shown in Fig. 4(A) and a needle 52 having a reversed V-shaped tip portion. Thus, it is found that these needles are inappropriate. It is conceivable that the friction resistance of the tip portion 5b having the inclined surface 5c as prepared such that the needle 5 is cut off from one direction is least.

### Second Experiment

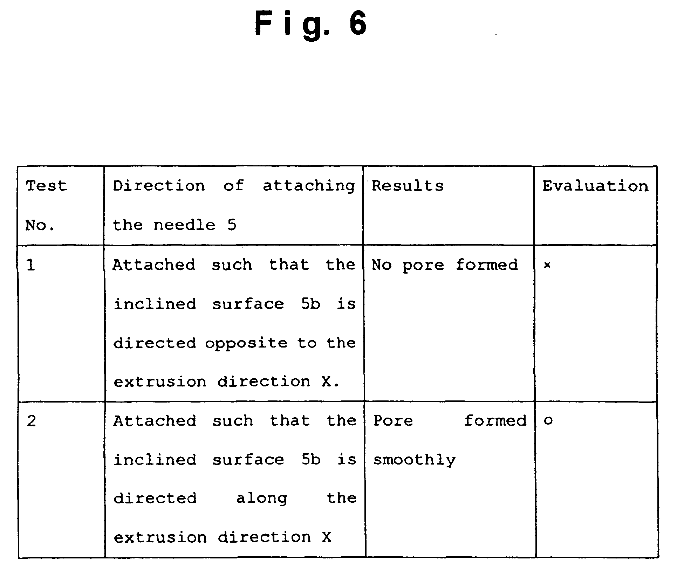

Subsequently, the inventors of the present application conducted a second experiment for determining the direction along which the needle 5 is suitably attached. The results are shown in Fig. 6(Table) attached.

By the way, the present second examination was carried out under the following conditions: corrugated tube material: polyethylene resin; product dimensions: 250 mm in inner diameter and 10 mm in thickness, material of needle: stainless steel, and outer diameter of needle: 8 mm. The evaluation was conducted by visual observation with a two-scale evaluation. Here, in table 2, "x" represents failure as a pore is not opened and "o" represents good as a pore is smoothly formed, respectively.

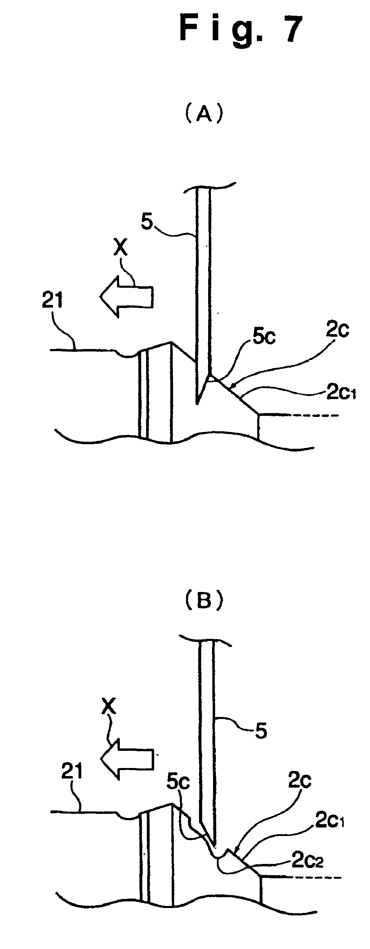

Fig. 7 is a view for concretely explaining the status of pore opening carried out in the second experiment, where Fig. 7 (A) shows the status of pore opening in Test No. 1 and Fig. 7 (B) shows the status of pore opening in Test No. 2.

First, in this second experiment, the tip portion 5b of the needle 5 was designed so as to be stabbed and inserted after selecting the inclined wall surface 2c₁ of a discarding sack portion 2c situated next to the socket part 2b in the molding process.

For this reason, the discarding sack portion 2c is a portion to be cut and removed, so that there is no problem whether any pore is formed or not. Besides, the tip portion 5b having a warped opening exerts a shovel-like function and reduces its friction resistance much more when the needle 5 is stabbed and inserted into the inclined wall surface 2c₁ which is inclined in the direction opposite to the extrusion-molding direction X.

In other words, the inclined wall surface 2c₁ of the discarding sack portion 2c is the most suitable position for pore opening when the needle 5 is stabbed and inserted while the inclined surface 5b thereof is directed opposite to the extrusion direction X.

As is recognized from Fig. 6 (Table) and Fig. 7 relevant to the second examination, Test No. 1 in the second examination, i.e. , the configuration of the needle 5 where the inclined surface 5b is directed opposite to the extrusion direction X (see Fig. 7(A)), allows the needle 5 to be smoothly stabbed and inserted.

However, Test No. 2, i.e., the configuration of the needle 5 where the inclined surface 5b was directed along the extrusion direction X, only compressed and deformed the inclined wall surface 2c₁ (see the reference numeral 2c₂ in Fig. 7(B)), but did not form a pore.

As described above, in the manufacturing method of the present invention, when the inclined surface 5c of the tip portion 5b of the needle 5 is stabbed and inserted while orienting in the direction opposite to the extrusion-molding direction, it is apparent that a pore can be formed more easily compared with the case in which the inclined surface 5b is oriented in the same direction as that of extrusion molding.

### Industrial Applicability

According to the method for manufacturing a double wall corrugated pipe of the present invention, a needle mounted on a metallic mold that molds the external wall of a socket part is capable of easily allowing a hollow chamber between inner and external walls to communicate the air in synchronization with the movement of a molding machine. Thus, a double wall corrugated pipe having a socket part of a uniform shape without any deformation can be surely manufactured in large quantities.

In addition, the method for manufacturing a double wall corrugated pipe of the present invention allows the formation of a pore in the external wall of a socket part even though there is no requirement of any complicate device and there is no need to make complicate arrangements at the time of manufacture. Therefore, the device costs can be reduced while working efficiency can be increased.

## Claims

1. A method for manufacturing a double wall corrugated pipe having a slot part on one end, a socket part on the other end, an external wall of a continuous irregular shape, and an inner wall of a tubular shape by subjecting a thermoplastic resin to extrusion molding, wherein
before the double wall corrugated pipe to be extrusion-molded is cooled off, a pore is formed in an external wall portion of the socket part by piercing with a needle to allow a hollow chamber of the socket part to communicate with the air, so as to be designed to prevent shrinkage or deformation of an external wall of the socket part accompanied by a decrease in temperature.

2. A method for manufacturing a double wall corrugated pipe as described in Claim 1, wherein
the needle is attached on a metallic mold for molding the external wall of the socket part and the needle is then stabbed into the external wall of the socket part in synchronization with the motion of a molding machine.

3. A method for manufacturing a double wall corrugated pipe as described in Claim 1 or 2, wherein
the needle is in the form of a tube with a hollow therein to communicate with the air and a tip portion thereof has an inclined surface facing laterally and presenting generally the Japanese katakana letter of " 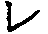 ".

4. A method for manufacturing a double wall corrugated pipe as described in Claim 3, wherein
the inclined surface is oriented in the direction opposite to the direction of extrusion molding.
